# FASCICULE DE BREVET EUROPEEN

(11) **EP 1 683 977 B1**
(45) Date de publication et mention de la délivrance du brevet: **13.08.2008**
(21) Numéro de dépôt: 06100081.6
(22) Date de dépôt: 04.01.2006
(51) Int. Cl.: F16B 31/02

(54) **Dispositif de fixation type vis/écrou à limiteur d' effort incorporé**
Befestigungseinrichtung der Schrauben/Mutter Gattung mit eingebautem Kraftbegrenzer
Fastening device of the screw/nut type incorporating a load limiter

(30) Priorité: 24.01.2005 FR 0500701
(43) Date de publication de la demande: 26.07.2006
(73) Titulaire: Acument Bonneuil sur Marne S.A.R.L., 94380 Bonneuil-sur-Marne (FR)
(72) Inventeur: Virgl, Alain, 89140 Pont sur Yonne (FR); Champfailly, Jean-Louis, 92300 Levallois (FR)
(74) Mandataire: Texier, Christian

(56) Documents cités:
- CH-A- 658 100
- DE-A1- 4 403 974
- US-A- 5 980 177

## Description

La présente invention concerne le domaine des dispositifs de fixation type vis/écrou tel qu'illustré dans les documents US 5,980,177 A ou DE 44039774 A.

Plus précisément, la présente invention concerne les dispositifs de fixation type vis/écrou comprenant un moyen incorporé adapté pour limiter l'effort appliqué sur les pièces fixées, lors du serrage du dispositif.

De nombreux dispositifs répondant à cette définition ont déjà été proposés.

Cependant, les dispositifs connus ne donnent pas toujours totalement satisfaction.

En particulier, les dispositifs jusqu'ici proposés s'avèrent souvent complexes, coûteux, voire de fiabilité laissant à désirer.

La présente invention a maintenant pour objectif de proposer un nouveau dispositif qui élimine les inconvénients de la technique antérieure.

Ce but est atteint, dans le cadre de la présente invention, grâce à un dispositif de fixation comprenant une vis et un écrou à filets complémentaires caractérisé par le fait que les filets de la vis et de l'écrou comportent des discontinuités telles qu'elles autorisent une déformation axiale d'au moins une zone des filets adjacente à ladite discontinuité de l'un de la vis ou de l'écrou, lorsqu'un effort axial supérieur à un seuil est appliqué sur le dispositif, de sorte que les filets ainsi déformés, viennent en butée sur ceux de l'autre de l'écrou ou de la vis.

Selon une autre caractéristique avantageuse de la présente invention, les filets adaptés pour être déformés sont scindés en différents secteurs.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective d'un dispositif de fixation conforme à la présente invention en position assemblée de l'écrou sur la vis,
- les figures 2, 3 et 4 représentent des vues respectives en perspective des trois pièces élémentaires d'un dispositif conforme à un mode de réalisation préférentiel de la présente invention, à savoir une vis, un écrou et un volant de commande,
- la figure 5 représente selon une vue latérale, la coopération ente les filets d'une vis et les filets d'un écrou avant application d'un effort supérieur au seuil de déformation des filets, et
- la figure 6 représente une vue similaire latérale illustrant la coopération entre les filets de la vis et de l'écrou après application d'un effort supérieur au seuil de déformation précité des filets.

Le dispositif conforme à la présente invention comprend essentiellement une vis 100 et un écrou 200. De préférence, il comprend également un volant de commande 300. Cependant ce dernier n'est pas rigoureusement indispensable. De ce fait, dans un premier temps, on va s'attacher à décrire uniquement la coopération entre la vis 100 et l'écrou 200, conforme à la présente invention.

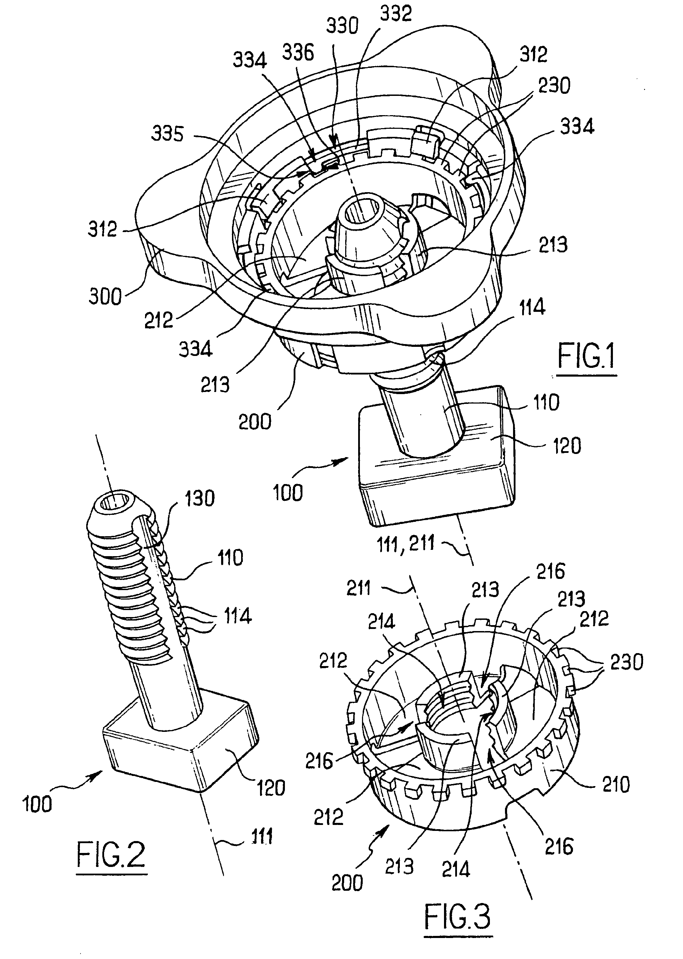

Comme on le voit en particulier sur la figure 2 annexée, la vis 100 comprend un fût 110 centré sur un axe 111, comprenant des filets 114, et une tête élargie 120, c'est-à-dire présentant au moins une dimension transversale supérieure à celle du diamètre extérieur des filets 114.

Comme indiqué précédemment, les filets 114 comprennent au moins une discontinuité, c'est-à-dire une interruption locale des filets. Selon le mode de réalisation préférentiel représenté sur la figure 2, cette discontinuité est formée par au moins une gorge longitudinale 130, parallèle à l'axe 111. Typiquement, la gorge 130 s'étend sur toute la hauteur des filets 114 et pénètre en partie dans la masse du fût 110. Plus précisément encore, de préférence, il est prévu dans le cadre de la présente invention deux gorges 130 parallèles entre elles et parallèles à l'axe 111, diamétralement opposées par rapport à ce dernier. Bien évidemment en variante, on peut prévoir un nombre de gorges 130 définissant les discontinuités des filets 114, supérieur à 2.

L'écrou 200 représenté sur la figure 3 annexée, conforme à un mode de réalisation préférentiel de la présente invention, comprend un anneau cylindrique 210 centré sur un axe 211. L'anneau 210 porte sur sa surface interne plusieurs voiles coplanaires 212 formés respectivement par des secteurs de disque coplanaires entre eux et orthogonaux à l'axe 211.

Selon le mode de réalisation particulier représenté sur la figure 3, il est ainsi prévu trois secteurs 212 équi-répartis autour de l'axe 211. Ce nombre n'est cependant pas limitatif. Chaque secteur 212 porte sur son extrémité radialement interne, un secteur de cylindre 213 centré sur l'axe 211. De plus, chaque secteur 213 porte, sur sa surface radialement interne, des tronçons de filets 214. Les tronçons de filets 214 ainsi formés sur les secteurs 213 sont positionnés pour définir en combinaison des filets d'un taraudage complémentaire des filets 114 de la vis 100. Plus précisément encore, les filets 214 étant portés par les secteurs cylindriques discontinus 213, le taraudage défini par les filets 214 présente des discontinuités ou interruptions correspondant aux séparations 216 définies entre les secteurs 213.

Dans le cas d'espèce, les discontinuités sont rectilignes puisqu'elles sont définies par les gorges 216 parallèles à l'axe 211 définies entre deux secteurs cylindriques 213 adjacents.

L'extension radiale des secteurs 212 est adaptée pour être suffisante afin de donner de la souplesse aux voiles 212 et autoriser une déformation axiale de ceux-ci, au moins de leur extrémité radialement interne, lorsqu'un effort axial est appliqué sur le dispositif.

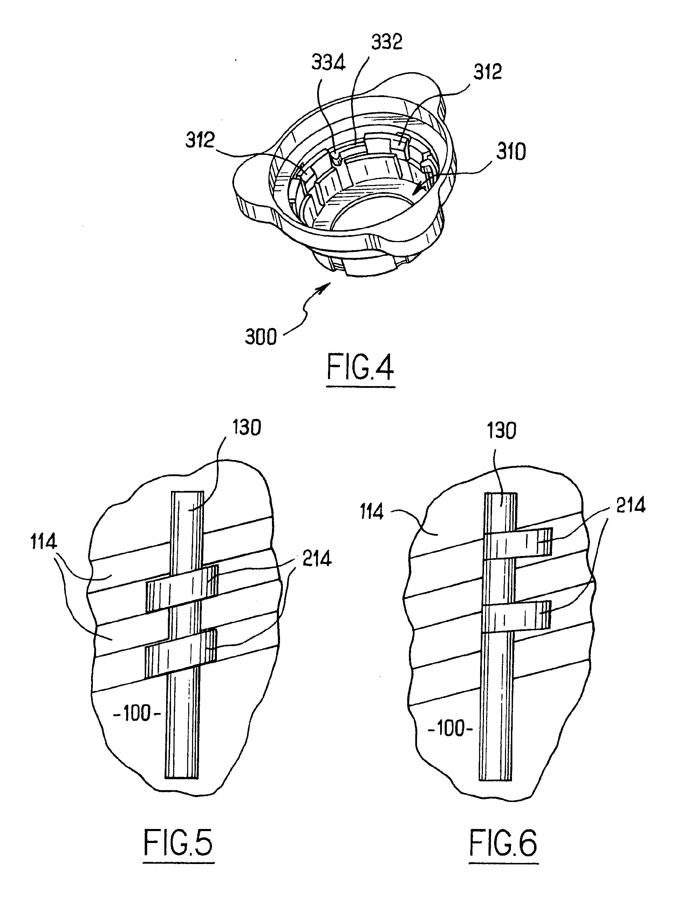

A cette fin, la figure 5 représente selon une vue latérale la coopération définie entre les filets 114 de la vis 100 et les filets 214 de l'écrou 200 à l'origine du serrage, lorsque l'effort axial appliqué entre la vis 100 et l'écrou 200 reste modéré et que par conséquent les secteurs des filets 214 de l'écrou glissent entre les filets 114 de la vis.

Comme on l'a illustré sur la figure 6, en revanche, quand le serrage atteint un seuil, c'est-à-dire que les pièces serrées entre la tête 120 de la vis et l'écrou 200 sont placées sous une contrainte ou effort axial supérieur à un seuil, les tronçons ou voiles 212 se déforment, plus précisément se vrillent de sorte qu'une extrémité au moins des filets 214 est déformée et tend à se positionner non pas selon une génératrice en hélice par rapport à l'axe 211, mais sensiblement dans un plan transversal à cet axe 211.

En conséquence comme on le voit sur la figure 6, l'extrémité précitée des filets 214 de l'écrou 200 vient buter contre l'extrémité en regard des filets 114 de la vis 100, ce qui interdit toute rotation relative complémentaire entre l'écrou 200 et la vis 100. Le serrage est ainsi interrompu.

Dans le cadre de la présente invention, on peut envisager un entraînement direct de l'écrou 200, c'est-à-dire une sollicitation directe de l'écrou 200 pour assurer le serrage.

Néanmoins, selon une variante avantageuse de l'invention, il est prévu un volant de commande 300 rapporté sur l'écrou 200 pour assurer l'entraînement de ce dernier. De plus dans ce cas, de préférence, l'interface définie entre le volant de commande 300 et l'écrou 200 comprend elle-même un limiteur de couple.

De nombreuses variantes de réalisation peuvent être envisagées à cet effet pour constituer le limiteur de couple précité. De ce fait, les dispositions représentées sur les figures annexées ne seront pas décrites dans le détail par la suite.

On notera cependant que selon le mode de réalisation préférentiel représenté sur les figures annexées, le volant de commande 300 comprend une cage 310, globalement cylindrique, adaptée pour recevoir l'écrou 200 et maintenir ce dernier axialement, par exemple grâce à des dents d'encliquetage 312

Le volant 300 comprend en outre un moyen de liaison à rotation contrôlé entre le volant de commande 300 et l'écrou 200.

Ces moyens sont de préférence adaptés pour imposer une liaison à rotation entre le volant de commande 300 et l'écrou 200 dans un sens d'entraînement tout en définissant, pour le sens d'entraînement et de rotation relatif opposé, d'une part une liaison à rotation entre le volant de commande 300 et l'écrou 200, tant qu'une libre rotation est autorisée entre la vis 100 et l'écrou 200 et d'autre part au contraire une libre rotation entre le volant de commande 300 et l'écrou 200, lorsqu'un blocage est obtenu entre la vis 100 et l'écrou 200 par butée de l'extrémité des filets 214 sur celles de filets 114, comme indiqué précédemment.

Dans le cadre de la présente invention, les moyens de liaison définis entre le volant de commande 300 et l'écrou 200 comprennent une série de dentures 230 sur la surface extérieure de l'écrou 200 et une série de cliquets ou équivalents 330 aptes à coopérer avec les dentures 230, sur le volant de commande 300.

Plus précisément, chaque cliquet 330 est formé de préférence d'une languette 332 qui s'étend dans une direction générale périphérique autour de l'axe 211 et qui est munie à son extrémité libre d'une denture 334. Par ailleurs, cette denture 334 présente d'un côté, à savoir de préférence vers son extrémité libre, un flanc radial 335 passant par un plan qui coïncide avec l'axe 211, tandis que sur le côté opposé, c'est-à-dire vers la base de la languette 332 raccordée sur le volant de commande 300, la denture 334 présente de préférence un flanc 336 incliné par rapport à un tel plan radial.

Les dentures 230 précitées prévues sur l'écrou 200 présentent quant à elles des flancs radiaux passant par l'axe 211.

L'homme de l'art comprendra que lorsque le flanc radial 335 des dentures 334 repose contre une denture 230, il est défini une liaison à rotation entre le volant de commande 300 et l'écrou 200. En d'autres termes, la rotation du volant de commande 300 entraîne la rotation de l'écrou 200.

En revanche, lorsque le flanc incliné 336 d'une denture 334 repose contre une denture 230, la denture 334 peut glisser sur la denture 230 par déformation de la languette support 332 radialement vers l'extérieur et ainsi autoriser une libre rotation du volant de commande 300 par rapport à l'écrou 200, ce dernier restant immobilisé en rotation sur la vis 100 en raison de la coopération définie, telle que décrite précédemment, entre les extrémités des filets 14 et 214.

Bien évidemment, le flanc radial 335 des dentures 334 est de préférence adapté pour venir solliciter les dentures 230 lorsque l'écrou est entraîné dans le sens du desserrage afin de garantir celui-ci, alors que les flancs inclinés 336 sont adaptés pour venir solliciter les dentures 230 de l'écrou 200 dans le sens du serrage afin de limiter le couple appliqué dans ce cas.

En d'autres termes, le limiteur de couple défini par la coopération entre les dentures 230 de l'écrou 200 et les cliquets 330 du volant de commande 300 est adapté pour autoriser une libre rotation entre le volant de commande 300 et l'écrou 200 quand un blocage est imposé entre la vis 100 et l'écrou 200 tout en imposant une liaison à rotation entre le volant de commande 300 et l'écrou 200 dans le cas contraire.

Le nombre de dentures 230 et le nombre de cliquets 330 pourront être adaptés par l'homme de l'art en fonction de chaque condition particulière d'application.

Selon la représentation donnée sur les figures annexées, il est prévu trois languettes 330 sur le volant de commande 300 équi-réparties autour de l'axe central de cette pièce.

Bien évidemment, le limiteur de couple constitué par les dentures 230 et les cliquets 330 précités, peut faire l'objet de nombreuses variantes. A titre d'exemple, l'on peut prévoir des flancs inclinés non pas sur les dentures 334 mais sur les dentures 230, pour autoriser, dans un sens de rotation relatif, une libre rotation entre le volant de commande 300 et l'écrou 200. Tout comme l'on peut prévoir les cliquets susceptibles de déformation élastique non pas sur le volant de commande 300 mais sur l'écrou 200 en plaçant alors l'équivalent des dentures 230 sur le volant de commande 300.

L'homme de l'art notera que le diamètre des filets 114, 214 est inférieur au diamètre d'application des cliquets 330 sur les dentures 230. Ainsi, l'effort axial appliqué entre les pièces assure en premier lieu la déformation des voiles 212 et l'appui des filets 214 sur les filets 114 de la vis avant de déclencher le limiteur de couple constitué par les cliquets 330.

Le dispositif conforme à la présente invention peut être réalisé en tout matériau approprié, de préférence intégralement en matière plastique thermodurcissable. Cependant, en variante l'une au moins des pièces pourrait être réalisé au moins en partie en métal.

La présente invention peut s'appliquer à tout type de serrage. En particulier, mais non limitativement pour la fixation d'accessoires sur véhicules automobiles.

Le dispositif conforme à la présente invention peut être utilisé dans le cadre d'un serrage manuel ou dans le cadre d'un serrage automatique, par exemple à l'aide d'une visseuse électrique.

Bien entendu, la présente invention n'est pas limitée aux modes de réalisation particuliers qui viennent d'être décrits mais s'étend à toute variante conforme à son esprit.

A titre d'exemple, les discontinuités rectilignes définies sur la vis 100 et sur l'écrou 200, d'une part par les gorges 130 et d'autre part par les ajours 216, pourraient être non rectilignes, par exemple inclinées ou incurvées par rapport à l'axe 111 ou 211.

Par ailleurs en variante les flancs 336 décrits précédemment comme étant préférentiellement inclinés par rapport à un plan radial pour permettre d'échapper aux dentures 230 lorsque le couple appliqué dépasse un seuil, pourraient être remplacés par des flancs radiaux, si l'élasticité et/ou le point d'ancrage des languettes 330 et l'orientation de celles-ci permettent d'assurer par eux-mêmes le dégagement requis quand le couple appliqué dépasse ledit seuil. Dans ce contexte de préférence les languettes 330 s'étendent dans la direction du sens de desserrage, à partir de leur point d'ancrage sur le volant 300 de sorte qu'elles travaillent en arc-boutement dans le sens de desserrage et en traction sur les dentures 330 dans le sens de serrage.

D'autres caractéristiques de l'invention sont les suivantes :
- les filets 214 adaptés pour être déformés sont portés par des voiles 212 globalement transversaux à l'axe 211 de la pièce,
- le dispositif est réalisé au moins en partie en matériau thermoplastique.

## Revendications

1. Dispositif de fixation comprenant une vis (100) et un écrou (200) à filets complémentaires (114, 214), **caractérisé par le fait que** les filets (114, 214) de la vis (100) et de l'écrou (200) comportent des discontinuités (130, 216) telles qu'elles autorisent une déformation axiale d'au moins une zone des filets (214) adjacente à ladite discontinuité (216) de l'un de la vis (100) ou de l'écrou (200), lorsqu'un effort axial supérieur à un seuil est appliqué sur le dispositif, de sorte que les filets (214) ainsi déformés viennent en butée sur ceux de l'autre de l'écrou (200) ou de la vis (100).

2. Dispositif selon la revendication 1, **caractérisé par le fait que** les filets (214) adaptés pour être déformés sont scindés en différents secteurs.

3. Dispositif selon l'une des revendications 1 ou 2, **caractérisé par le fait que** les filets (214) adaptés pour être déformés, sont portés par des voiles (212) de la vis ou de l'écrou globalement transversaux à l'axe (211) de ladite vis ou dudit écrou.

4. Dispositif selon l'une des revendications 1 à 3, **caractérisé par le fait que** les filets (214) adaptés pour être déformés sont prévus sur l'écrou (200).

5. Dispositif selon l'une des revendications 1 à 4, **caractérisé par le fait que** les discontinuités (130, 216) sont formées par une interruption des filets parallèle à l'axe (111, 211).

6. Dispositif selon l'une des revendications 1 à 5, **caractérisé par le fait que** les discontinuités comprennent au moins une gorge (130) sur la vis (100).

7. Dispositif selon l'une des revendications 1 à 6, **caractérisé par le fait que** les discontinuités comprennent au moins deux gorges (130) sur les filets (114) de la vis (100).

8. Dispositif selon l'une des revendications 1 à 7, **caractérisé par le fait que** l'écrou (200) comprend un anneau cylindrique (210) centré sur un axe (211), qui porte sur sa surface interne plusieurs voiles coplanaires (212) eux-mêmes munis sur leur extrémité radialement interne d'un secteur cylindrique respectif (213) qui porte sur sa surface radialement interne des tronçons de filets (214).

9. Dispositif selon l'une des revendications 1 à 8, **caractérisé par le fait qu'**il comprend en outre un volant de commande (300) rapporté sur l'écrou (200).

10. Dispositif selon la revendication 9, **caractérisé par le fait qu'**un limiteur de couple (230, 330) est prévu au niveau de l'interface entre le volant de commande (300) et l'écrou (200).

11. Dispositif selon la revendication 10, **caractérisé par le fait que** le limiteur de couple (230, 330) comprend des languettes élastiques (332) munies en extrémité d'une denture (334), sur l'un du volant de commande (300) ou de l'écrou (200), apte à coopérer avec une série de dentures (230) prévue sur l'autre de l'écrou (200) ou du volant de commande (300).

12. Dispositif selon la revendication 11, **caractérisé par le fait que** l'une des séries de dentures (230, 334) possède d'un côté des flancs (335) radiaux par rapport à l'axe du dispositif et possède, de l'autre côté des flancs (336) inclinés par rapport à cet axe.

13. Dispositif selon l'une des revendications 9 à 12 prise en combinaison avec la revendication 10, **caractérisé par le fait que** le limiteur de couple (230, 330) défini au niveau de l'interface entre le volant de commande (300) et l'écrou (200) est situé sur un rayon moyen supérieur à celui de la coopération entre les filets (114) de la vis (100) et les filets (214) de l'écrou (200).

14. Dispositif selon l'une des revendications précédentes, **caractérisé par le fait qu'**il est réalisé au moins en partie en matériau thermoplastique.

## Claims

1. A fastening device comprising a screw (100) and a nut (200) with complementary threads (114, 214), **characterised in that** the threads (114, 214) of the screw (100) and of the nut (200) comprise discontinuities (130, 216) such that they enable axial deformation of at least one zone of the threads (214) adjacent to said discontinuity (216) of one of the screw (100) or of the nut (200), when an axial effort greater than a threshold is applied to the device, such that the threads (214) thus deformed abut against those of the other of the nut (200) or of the screw (100).

2. The device according to Claim 1, **characterised in that** the threads (214) adapted to be deformed are split into different sectors.

3. The device according to any one of Claims 1 or 2, **characterised in that** the threads (214) adapted to be deformed are carried by wings (212) of the screw or the nut overall transversally to the axis (211) of said screw or nut.

4. The device according to any one of Claims 1 to 3, **characterised in that** the threads (214) adapted to be deformed are provided on the nut (200).

5. The device according to any one of Claims 1 to 4, **characterised in that** the discontinuities (130, 216) are formed by interruption to the threads parallel to the axis (111, 211).

6. The device according to any one of Claims 1 to 5, **characterised in that** the discontinuities comprise at least one throat (130) on the screw (100).

7. The device according to any one of Claims 1 to 6, **characterised in that** the discontinuities comprise at least two throats (130) on the threads (114) of the screw (100).

8. The device according to any one of Claims 1 to 7, **characterised in that** the nut (200) comprises a cylindrical ring (210) centred on an axis (211) carrying on its internal surface several coplanar wings (212) in turn fitted on their radially internal end with a respective cylindrical sector (213) carrying on its radially internal surface sections of thread (214).

9. The device according to any one of Claims 1 to 8, **characterised in that** it also comprises a control wheel (300) connected to the nut (200).

10. The device according to Claim 9, **characterised in that** a coupling limiter (230, 330) is provided at the level of the interface between the control wheel (300) and the nut (200).

11. The device according to Claim 10, **characterised in that** the coupling limiter (230, 330) comprises elastic tabs (332) fitted at an end with a denture (334), on one of the control wheel (300) or the nut (200), for cooperating with dentures (230) provided on the other end of the nut (200) or control wheel (300).

12. The device according to Claim 11, **characterised in that** one of the series of dentures (230, 334) has on one side radial flanks (335) relative to the axis of the device and on the other side has flanks (336) inclined relative to this axis.

13. The device according to any one of Claims 9 to 12 in combination with Claim 10, **characterised in that** the coupling limiter (230, 330) defined at the level of the interface between the control wheel (300) and the nut (200) is situated on an average radius greater than that of the cooperation between the threads (114) of the screw (100) and the threads (214) of the nut (200).

14. The device according to any one of the preceding claims, **characterised in that** it is made at least in part of thermoplastic material.

## Patentansprüche

1. Befestigungsvorrichtung, die eine Schraube (100) und eine Mutter (200) mit komplementären Gewinden (114, 214) umfasst, **dadurch gekennzeichnet, dass** die Gewinde (114, 214) der Schraube (100) und der Mutter (200) Diskontinuitäten (130, 216) auf solche Weise umfassen, dass sie eine axiale Verformung wenigstens einer Zone der Gewinde (214), die benachbart zu der Diskontinuitäten (216) von einem von der Schraube (100) oder der Mutter (200) liegt, gestatten, wenn eine axiale Kraft auf die Vorrichtung angewendet wird, die größer als ein Schwellwert ist, und dies auf solche Weise, dass die so verformten Gewinde (214) auf Anschlag gegen diejenigen von dem anderen von der Mutter (200) oder der Schraube (100) kommen.

2. Vorrichtung nach Anspruch 1, **dadurch gekennzeichnet, dass** die Gewinde (214), die für die Verformung eingerichtet sind, in verschiedene Sektoren aufgeteilt sind.

3. Vorrichtung nach einem der Ansprüche 1 oder 2, **dadurch gekennzeichnet, dass** die Gewinde (214), die für die Verformung eingerichtet sind, durch Lappen (212) der Schraube oder der Mutter getragen werden, die im wesentlichen quer zur Achse (211) der Schraube oder der Mutter liegen.

4. Vorrichtung nach einem der Ansprüche 1 bis 3, **dadurch gekennzeichnet, dass** die Gewinde (214), die für die Verformung eingerichtet sind, an der Mutter (200) vorgesehen sind.

5. Vorrichtung nach einem der Ansprüche 1 bis 4, **dadurch gekennzeichnet, dass** die Diskontinuitäten (130, 216) durch eine Unterbrechung der Gewinde parallel zur Achse (111, 211) gebildet werden.

6. Vorrichtung nach einem der Ansprüche 1 bis 5, **dadurch gekennzeichnet, dass** die Diskontinuitäten wenigstens eine Rille (130) an der Schraube (100) umfassen.

7. Vorrichtung nach einem der Ansprüche 1 bis 6, **dadurch gekennzeichnet, dass** die Diskontinuitäten wenigstens zwei Rillen (130) an dem Gewinde (114) der Schraube (100) umfassen.

8. Vorrichtung nach einem der Ansprüche 1 bis 7, **dadurch gekennzeichnet, dass** die Mutter (200) einen zylindrischen Ring (210) umfasst, der auf einer Achse (211) zentriert ist und der auf seiner Innenfläche mehrere koplanare Lappen (212) trägt, die ihrerseits an ihrem radial innen gelegenen Ende jeweils mit einem zylindrischen Abschnitt (213) ausgestattet sind, der an seiner radial innen gelegenen Fläche Gewindeabschnitte (214) umfasst.

9. Vorrichtung nach einem der Ansprüche 1 bis 8, **dadurch gekennzeichnet, dass** sie außerdem ein Einstellrad (300) umfasst, das an der Mutter (200) angebracht ist.

10. Vorrichtung nach Anspruch 9, **dadurch gekennzeichnet, dass** im Bereich der Schnittstelle zwischen dem Einstellrad (300) und der Mutter (200) ein Drehmomentbegrenzer (230, 330) vorgesehen ist.

11. Vorrichtung nach Anspruch 10, **dadurch gekennzeichnet, dass** der Drehmomentbegrenzer (230, 330) an einem von dem Einstellrad (300) oder der Mutter (200) elastische Zungen (332) umfasst, die am Ende mit einem Zahn (334) ausgestattet sind, der dafür eingerichtet ist, mit einer Reihe von Zähnen (230) zusammen zu arbeiten, die am anderen von der Mutter (200) oder dem Einstellrad (300) vorgesehen sind.

12. Vorrichtung nach Anspruch 11, **dadurch gekennzeichnet, dass** eine der Zahnreihen (230, 334) an einer Seite Flanken (335) hat, die radial in Bezug auf die Achse der Vorrichtung sind, und an der anderen Seite Flanken (336) hat, die in Bezug auf diese Achse geneigt sind.

13. Vorrichtung nach einem der Ansprüche 9 bis 12 in Kombination mit Anspruch 10, **dadurch gekennzeichnet, dass** der Drehmomentbegrenzer (230, 330), der im Bereich der Schnittstelle zwischen dem Einstellrad (300) und der Mutter (200) definiert ist, sich auf einem mittleren Radius befindet, der größer ist, als derjenige des Zusammenwirkens zwischen dem Gewinde (114) der Schraube (100) und dem Gewinde (214) der Mutter (200).

14. Vorrichtung nach einem der vorhergehenden Ansprüche, **dadurch gekennzeichnet, dass** sie wenigstens teilweise aus thermoplastischem Material realisiert ist.
